# EUROPEAN PATENT SPECIFICATION

(11) **EP 1 109 232 B1**
(45) Date of publication and mention of the grant of the patent: **02.05.2002**
(21) Application number: 99830724.3
(22) Date of filing: 25.11.1999
(51) Int. Cl.: H01L 41/09

(54) **Piezo-electrostatic step actuator**
Piezoelektrischer Schrittantrieb
Organe d' actionnement pièzoélectrique pas à pas

(43) Date of publication of application: 20.06.2001
(73) Proprietor: C.R.F. Società Consortile per Azioni, 10043 Orbassano (Torino) (IT)
(72) Inventor: Perlo, Piero, C.R.F. Società Consortile per Azioni, 10043 Orbassano (Torino) (IT); Pizzi, Marco, C.R.F. Società Consortile per Azioni, 10043 Orbassano (Torino) (IT); Sinesi, Sabino, C.R.F. Stà Consortile per Azioni, 10043 Orbassano (Torino) (IT); Lambertini, Vito C.R.F. Stà Consortile per Azioni, 10043 Orbassano (Torino) (IT); Pullini, Daniele C.R.F. Stà Consortile per Azioni, 10043 Orbassano (Torino) (IT)
(74) Representative: Notaro, Giancarlo

(56) References cited:
- US-A- 4 884 002
- PATENT ABSTRACTS OF JAPAN vol. 009, no. 216 (E-340), 3 September 1985 (1985-09-03) & JP 60 074982 A (HITACHI MAXELL KK), 27 April 1985 (1985-04-27)
- PATENT ABSTRACTS OF JAPAN vol. 009, no. 110 (E-314), 15 May 1985 (1985-05-15) & JP 60 002082 A (SHINSEI KOGYO:KK), 8 January 1985 (1985-01-08)

## Description

The present invention generally relates to electrostatic motors of low power and small dimensions, adapted for use as actuators in micro-electronic technology applications, for actuating mechanical devices and the like in conditions in which vibrations take place, such as in the automotive field.

In such applications, piezoelectric electrostatic motor-actuators have been proposed, in which the conversion of the electrical mechanical energy is based on reversed piezoelectric effect. These motors have various drawbacks, such as a relatively high cost of manufacture and poor reliability, they require rather high supply voltages and have an insufficiently high efficiency. Accordingly, the use of these piezoelectric motors is not satisfactory in general for the above mentioned uses, particularly on board motor-vehicles.

Electrostatic step actuators are also known comprising a planar stator, a movable planar member which is guided parallel to the stator at a predetermined distance therefrom, at least one electrode associated with the movable member, a plurality of deflectable blades or cilia, which are electrically conductive, each having one end associated with the stator and the opposite end adjacent to the movable member, and electric supply means for applying voltage pulses between the cilia and said electrode associated with the movable member so as to cause said cilia to adhere to the movable member during each voltage pulse, by electrostatical effect. In these devices, activation of the cilia also causes an elastic deformation of the latter which gives rise to a translation step of the movable member parallel to the stator, said cilia returning to their starting configuration when the voltage pulse is interrupted.

An actuator of the above indicated type is for instance disclosed in Dyatlov V. L., Konyaskin V. V., Potapov B. S. and Pyankov Yu. A. "Prospects of the Employment of Synchrotron Radiation in Film Electrostatic Actuator Technology", Nuclear Instruments and Methods in Physics Research, A359 (1995), pages 394-395.

The object of the present invention is that of providing a new step actuator which is able to exploit both the piezoelectric effect, and electrostatical adhesion in cilia of the above indicated type, in the best possible manner.

In view of achieving this object, the invention provides a step actuator comprising:
a planar stator,
a planar movable member guided parallel to the stator at a predetermined distance therefrom,
at least one electrode associated with the movable member,
a plurality of deflectable blades or cilia, which are electrically conductive, each having one end associated with the stator and the opposite end adjacent to the movable member, and
electric supply means for applying voltage pulses between the cilia and said electrode associated with the movable member, so as to cause said cilia to adhere to the movable member during each voltage pulse, by electrostatical effect,
characterised in that said cilia are associated with the stator with the interposition of piezoelectric means which can be activated by applying voltage pulses so as to cyclically assume a first configuration, in which the cilia come in contact with the movable member, so that they can adhere thereto by the said electrostatical effect, and a second configuration in which the cilia move away from the movable member while remaining however with their ends connected thereto, so that said ends performed a movement which has one component along the direction of movement of the movable member, so as to cause a step of the movable member along said direction.

In a first embodiment of the invention, the above mentioned cilia are supported by the stator through a first piezoelectric actuator arranged below the cilia which can be activated so as to impart a reciprocating movement to the cilia towards and away from the movable member. Also adjacent to said cilia, between the stator and the movable member, there is interposed a spacing member which is secured to the stator and is in sliding contact with the movable member. Below said spacing member a second piezoelectric actuator is arranged which can be activated so as to impart a reciprocating movement to the spacing member towards and away from the movable member, with a phase opposite to that of said first piezoelectric actuator. Preferably, moreover, a plurality of first and second piezoelectric actuators of the above indicated type is provided, alternated to each other, with each first piezoelectric actuator carrying cilia and each second piezoelectric actuator carrying a spacing member.

In a second embodiment of the invention, said cilia are supported by the stator by means of a deflectable blade parallel to the movable member, which is supported in a cantilever fashion by the stator and carrying the cilia on its free end, said blade including piezoelectric means which can be activated to cause a cyclical deflection of the blade towards and away from the movable member.

Further features and advantages of the invention will become apparent from the description which follows with reference to the annexed drawings, given purely by way of non limiting example, in which:
figure 1 is a diagrammatic view in cross-section of a first embodiment of the actuator according to the invention,
figures 2 to 5 show the same cross-section of figure 1 in four different conditions of operation of the actuator according to the invention,
figure 6 shows diagrams relating to the variation of the electric voltage supplied to the various terminals of the actuators of figure 1,
figure 7 is a diagrammatic view in cross-section of a second embodiment of the actuator according to the invention,
figure 8 shows a variant of figure 7,
figure 9 is a perspective diagrammatic view of the variant of figure 8,
figures 10-13 show four different conditions of operation of the actuator of figure 7,
figure 14 shows two diagrams relating to the operation of the actuator of figure 7, and
figure 15 is a variant of figure 14.

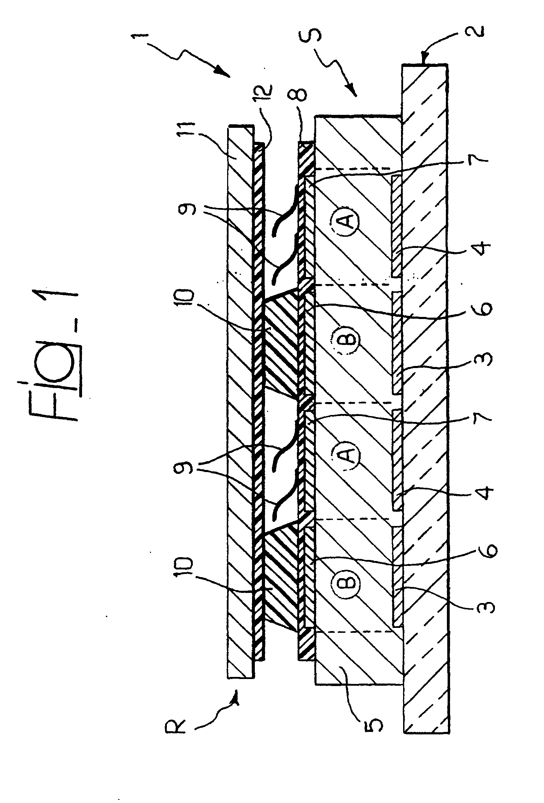

In figure 1, reference numeral 1 generally designates a step actuator comprising a planar stator S, and a planar movable member R which is guided parallel to stator S, at a predetermined distance therefrom. In the illustrated example, stator S comprises a base blade 2, such as of alumina or steel, on which one conductive layer, which is divided into a plurality of separate electrodes 3, 4 and one or more piezoelectric layers 5 are deposited such as by screen-printing, dipping, spin-coating, or by electrodeposition. Above the piezoelectric layer 5 a further conductive layer is deposited divided into separate electrodes 6, 7 which are then insulated by means of a dielectric or piezoelectric layer 8. The overall thickness of the structure of stator S preferably ranges between a few micrometers and some hundreds of micrometers. The facing pairs of electrodes 3, 6 and 4, 7, along with the piezoelectric layer 5, define a plurality of piezoelectric actuators, respectively designated in figure 1 by A and B. Above each piezoelectric actuator A electrostatic metal cilia (or petals) are deposited each having one end secured to the dielectric layer 8 of stator S and the opposite end which is free and adjacent to the movable member R. The cilia preferably have a thickness of 0.5-3 micrometers and a length of a few micrometers. In correspondence with the piezoelectric actuators B, above the dielectric layer 8 a spacing member 10 is deposited constituted by a layer of friction resistant material having a low friction coefficient, with a thickness of about 1/10 the length of cilia 9. Each spacing member 10 is secured in sliding contact with movable member R.

The movable member is constituted by a blade 11 of metal material. Alternatively, the blade 11 may be of plastic material and be rendered conductive by means of a layer deposited by evaporation (of aluminium or other conductive materials such as silver, nichel, gold, ITO (Indium Tin Oxide), copper alloys) with a thickness of a few tens or hundreds of nanometers, or by screen-printing along with a suitable conductive coating). On the conductive layer a dielectric or ferroelectric insulating layer 12 is screen-printed, having a thickness between 1/10 micrometers and a few tens of micrometers, depending upon the dielectric characteristics of the material and the requirements.

Figures 2-6 show the principle of operation of the actuator of figure 1.

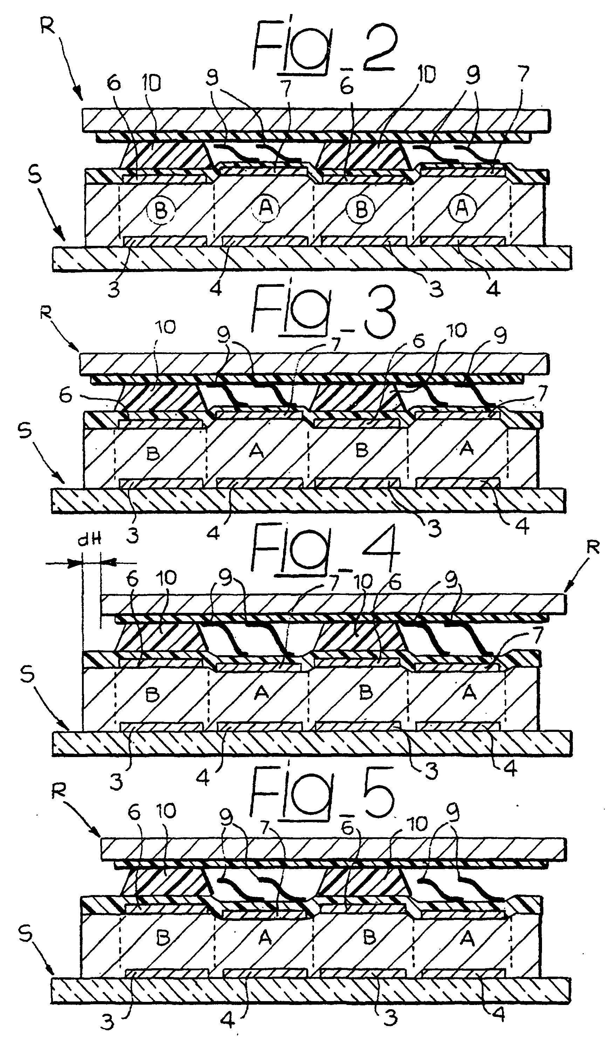

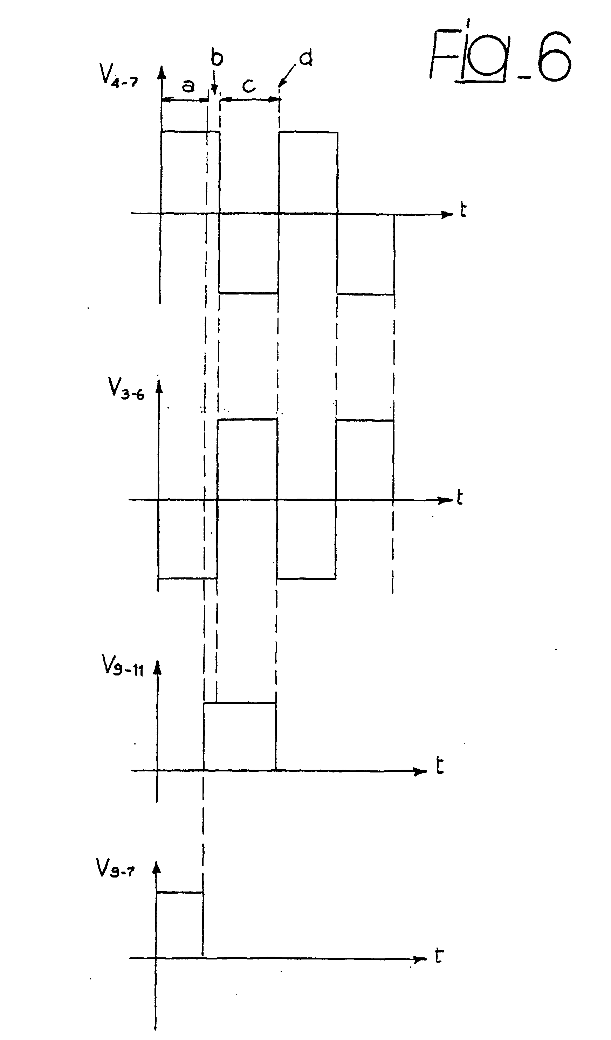

In operation, the electrodes 4, 7 of each piezoelectric actuator A are supplied with an alternated voltage, as shown in the first diagram of figure 6 so that each piezoelectric actuator A usually more between an elongated condition (see figures 2, 3) and a contracted condition (figures 4, 5) thus generating a reciprocating movement of the cilia 9 towards and away from the movable member R. Similarly, the electrodes 3, 6 of each piezoelectric actuator B are supplied with an alternated voltage, as shown in the second diagram from top in figure 6, with a phase opposite to that of the voltage supplied to electrodes 4, 7, so that also the piezoelectric actuator B are moved cyclically between an elongated coniguration and a contracted configuration generating a reciprocating movement of the spacing members 10 towards and away from the movable member (see figures 2-5).

Furthermore, during the terminal portion of the elongation stage of the piezoelectric actuators A and during the entire contraction stage of actuators A, an electric voltage is present between cilia 9 and movable member R (see the third diagram from top in figure 6) which ensures adhesion by electrostatical effect of cilia 9 to movable member R. In this manner, when the cilia 9 are in proximity of their uppermost raised position (figure 2) they adhere to movable member R (figure 3) and remain attached thereto during the contraction stage (figure 4). In the remaining time period, electric voltage is applied between cilia 9 and electrode 7 (last lowermost diagram in figure 6) so as to obtain an adhesion by electrostatical effect of a greater portion of cilia 9 to the dielectric layer 8. The stages shown in figures 2, 3, 4 and 5 are respectively designated by letters a, b, c, d in figure 6. The stage c shown in figure 4 is the active stage. During this stage, the upper ends of the cilia 9 perform a movement having a component along the direction of movement of the movable member R, so that the latter is compelled to perform a step dH. In this stage, the spacing members 10, beside fulfilling the function of spacing and guiding the movable member R, also serve to amplify the movement of the latter. As a matter of fact, when the lower ends of the cilia 9 are moved downwardly, the upper ends are compelled to move rightwardly (the length of the cilia being always the same) because the movable member R is hold in a vertical fixed position by the spacing members 10.

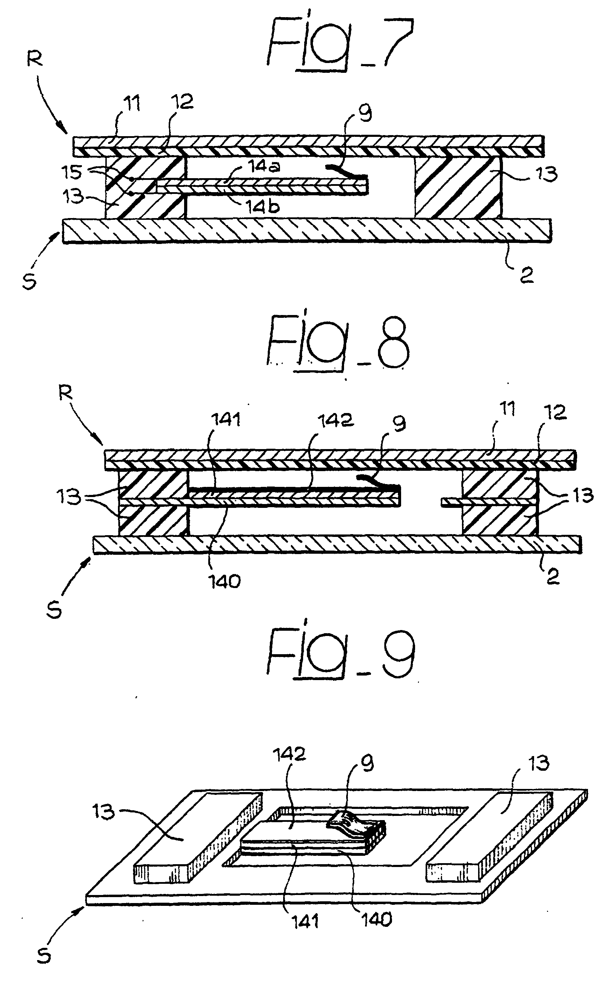

Figure 7 shows a second embodiment of the invention. In this figure, the parts common to figure 1 are designated by the same reference numeral. Also in this case a movable member R is provided constituted by a blade 11 made of a metal material or a plastic material rendered conductive by a layer provided by evaporation or screen-printing, with a suitable conductive coating. Also in this case, on the conductive layer 11 an insulating dielectric or ferroelectric layer 12 is screen-printed having a thickness similar to that of figure 1. Also in the case of figure 1, the stator S is provided on a base 2 made of alumina or steel. On this base, more layers are deposited by screen-printing, dipping, spin-coating, these layers being made of a friction resistant material having a low friction coefficient, so as to constitute blocks 13, which act both as spacers, guiding movement of the movable member R, and as supports for the deflectable blades 14, one of which is visible in figure 7. In the embodiment of figure 7, each blade 14 is actually constituted by a bimorphous piezoelectric element having two terminals 15. The dimensions of the bimorphous piezoelectric element 14 may vary from a few hundreds of micrometers to some tens of millimeters in length, from a few tens of micrometers to some millimeters in width, the thickness being in the range between a few micrometers and a few hundreds of micrometers. The bimorphous element 14 which is used may be both of the serial type, i.e. constituted by two layers 14a, 14b of piezoelectric material with opposite polarizations along the thickness direction, or of the parallel type, with the two layers of piezoelectric material 14a, 14b polarized in the same direction. Figures 8, 9 refer to a variant in which rather than a bimorphous piezoelectric element 14 a steel blade 140 is used having a thickness of a few tens of micrometers, which is suitably cut, on which a layer of piezoelectric material 141 is deposited by screen-printing, dipping or spin-coating, having a thickness in the range between a few micrometers and a few hundreds of micrometers. On the piezoelectric layer 141 an electrode 142 is provided by evaporation. In both the cases shown in figures 7, 8, 9, the free end of each deflectable blade 14, 140 supports one or more electrostatic cilia 9 of the type already described with reference to figure 1, having a thickness of 0.5-3 micrometers and a length of a few micrometers, which are insulated from electrode 142 by means of a layer of dielectric or ferroelectric material.

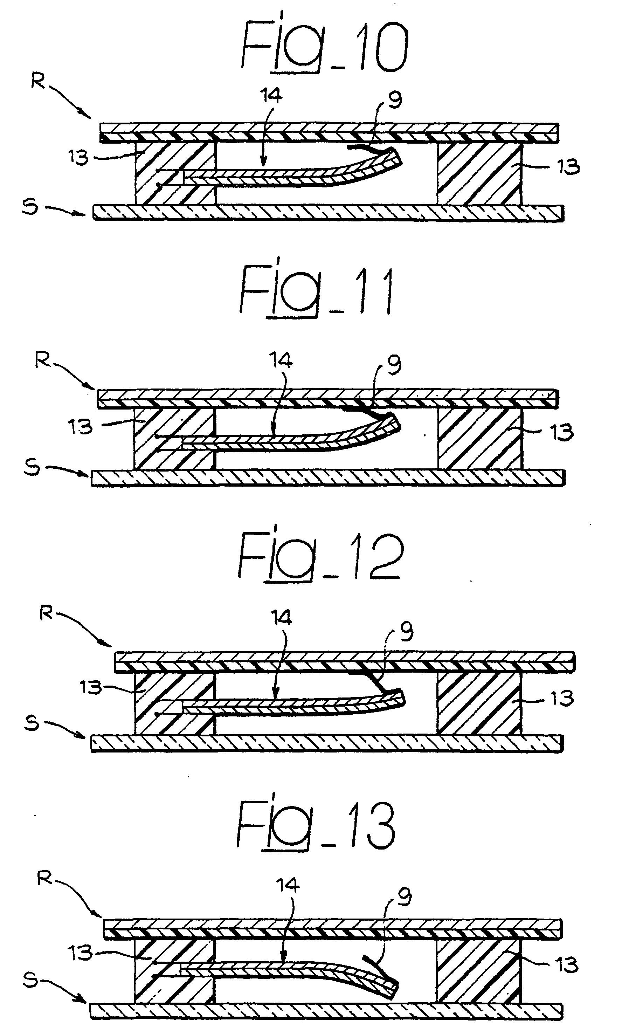

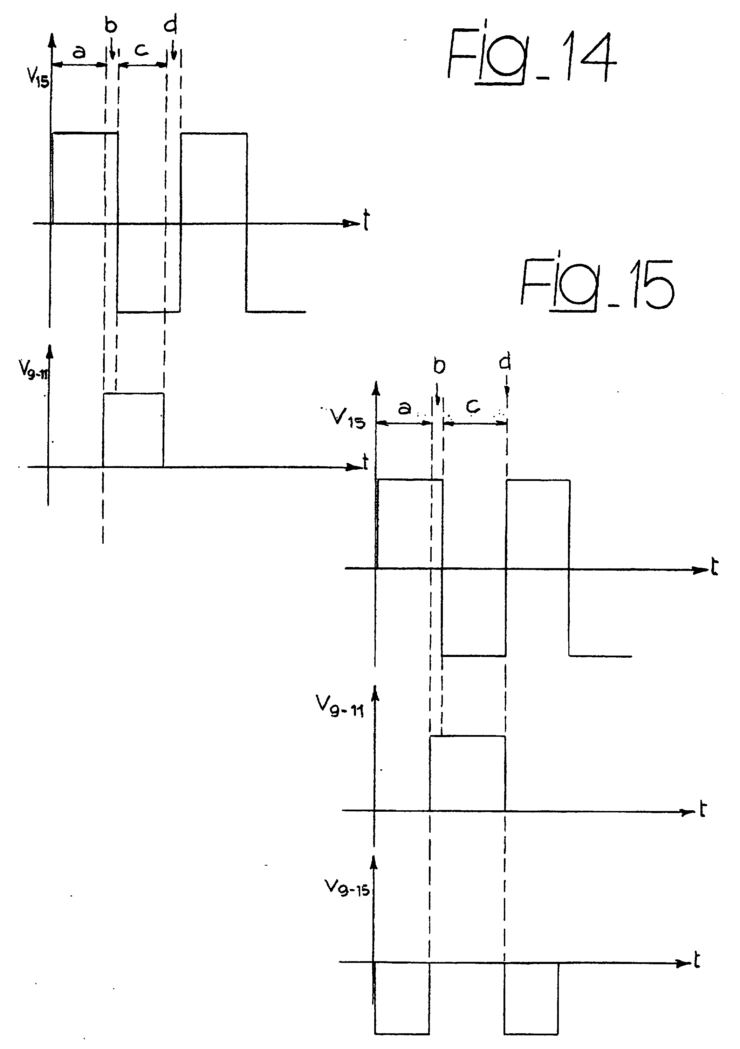

In operation (figures 10-13 and 14), by applying an alternated electric pulse, the bimorphous piezoelectric element 14 (or blade 140 in the case of figure 8) is cyclically deflected towards and away from the movable member R, so that the cilia 9 move towards and away from the movable member R cyclically. The movement away has a component in the direction of movement of the movable member R which generates a step dH of the movable member, since during the final approaching stage an electric voltage is present between the cilia 9 and the movable member R which ensures adhesion of the cilia to the surface of the movable member also during the initial stage of movement away of the bimorphous piezoelectric element or the blade from the surface. The cilia become attached to the surface of the movable member by electrostatical effect and when the piezoelectric bimorphous element or the blade begins to move away from the surface they drive the movable member through a step dH. During the final stage of movement away the voltage between cilia and movable member is nullified so as to ensure the separation of the cilia from the movable member (figure 13). In order to favour separation of the cilia from the surface of the movable member, a voltage between the cilia and the electrode of the piezoelectric element can be applied, as shown in the variant of figure 15. In this manner, the entire stage of the movement away of the piezoelectric element can be used to move the movable member (figure 15). In figures 14, 15 the stages indicated by a, b, c, d respectively correspond to the conditions shown in figures 10, 11, 12 and 13.

Naturally, while the principle of the invention remains the same, the details of construction and the embodiments may widely vary with respect to what has been described and shown purely by way of example, without departing from the scope of the present invention.

## Claims

1. Step actuator, comprising:
a planar stator (S),
a planar movable member (R) guided parallel to the stator (S) at a predetermined distance therefrom,
at least one electrode (11) associated with the movable member (R),
a plurality of deflectable blades or cilia (9), which are electrically conductive, each having one end associated with the stator (S) and the opposite end adjacent to the movable member (R), and
electric supply means to apply voltage pulses between the cilia (9) and said electrode (11) associated with the movable member, so as to cause said cilia (9) to adhere to the movable member (R) during each voltage pulse, by electrostatical effect,
**characterised in that** said cilia (9) are associated with the stator (S) with the interposition of piezoelectric means (A; 14; 141) which can be activated by applying voltage pulses so as to cyclivally assume a first configuration, in which the cilia (9) come in contact with the movable member (R), so that they adhere thereto by said electrostatical effect, and a second configuration, in which the cilia (9) move away from the movable member (R) while keeping their ends connected thereto, so that these ends perform a movement which has a component dH in the direction of movement of the movable member, so as to cause a step of the movable member in said direction.

2. Actuator according to claim 1, **characterised in that** said cilia (9) are supported by the stator (S) by a first piezoelectric actuator (A) arranged below said cilia and which can be activated so as to impart a reciprocating movement to the cilia towards and away from the movable member.

3. Actuator according to claim 2, **characterised in that** adjacent to said cilia (9), between the stator (S) and the movable member (9), there is interposed a spacing member (10) which is secured to the stator (S) and is in sliding contact with the movable member (R), and that below said spacing member (10) there is arranged a second piezoelectric actuator (B) which can be activated so as to impart a reciprocating movement of the spacing member (10) towards and away from the movable member (R), with a phase opposite to that of said first piezoelectric actuator (A).

4. Actuator according to claim 3, **characterised in that** a plurality of first and second piezoelectric actuators (A, B) are provided while are alternated to each other, with cilia (9) above each first piezoelectric actuator (A) and a spacing member (10) above each second piezoelectric actuator (B).

5. Actuator according to claim 4, **characterised in that** the stator (S) comprises a base blade (2) on which one or more layers of piezoelectric material (5) are arranged with a plurality of opposite electrodes (4, 7; 3, 6) located on the two opposite faces of the layer of piezoelectric material (5) so that the cooperating portions of said layer between each pair of opposite electrodes form said first and second piezoelectric actuators (A, B).

6. Actuator according to claim 4, **characterised in that** said spacing members (10) are each constituted by one or more layers of a material having a low friction coefficient.

7. Actuator according to claim 1, **characterised in that** said cilia (9) are supported by the stator (S) by means of a deflectable blade (14, 140) parallel to the movable member, supported in a cantilever fashion by the stator (S) and carrying the cilia (9) on its free end, said blade including piezoelectric means (14, 141) which can be activated to cause an alternated deflection of the blade towards and away from the movable member.

8. Actuator according to claim 7, **characterised in that** said blade (14) is constituted by a bimorphous piezoelectric member (14a, 14b) supported in a cantilever fashion by a spacing member (13) which is connected to said stator (S).

9. Actuator according to claim 7, **characterised in that** said blade comprises a steel blade (140) on which a layer (141) of a piezoelectric material is applied, said steel blade (140) being supported in a cantilever fashion by a spacing member (13) connected to the stator (S).

## Patentansprüche

1. Schrittaktuator, enthaltend:
einen ebenen Stator (S),
ein ebenes, bewegliches Element (R), das parallel zu dem Stator (S) mit einer vorbestimmten Distanz dazu geführt wird,
mindestens eine Elektrode (11), die mit dem beweglichen Element (R) verbunden ist,
eine Vielzahl von ablenkbaren Blättern oder Wimpern (9), die elektrisch leitend sind, wobei jedes bzw. jede ein Ende, das mit dem Stator (S) verbunden ist, und das gegenüberliegende Ende angrenzend zu dem beweglichen Element (R) aufweist, und
elektrische Zuführungsmittel, um Spannungsimpulse zwischen den Wimpern (9) und der Elektrode (11) anzulegen, die mit dem beweglichen Element verbunden ist, um die Wimpern (9) zu veranlassen, an dem beweglichen Element (R) während jedem Spannungsimpuls durch elektrostatische Effekte zu haften,
**dadurch gekennzeichnet, dass** die Wimpern (9) mit dem Stator (S) durch Dazwischenschalten von piezolelektrischen Mitteln (A; 14; 141) verbunden sind, die durch Anlegen von Spannungsimpulsen aktiviert werden können, um zyklisch eine erste Konfiguration, bei der die Wimpern (9) mit dem beweglichen Element (R) in Kontakt kommen, so dass sie durch die elektrostatischen Effekte daran haften, und eine zweite Konfiguration anzunehmen, bei der die Wimpern (9) sich von dem beweglichen Element (R) weg bewegen, während sie ihre Enden damit verbunden halten, so dass diese Enden eine Bewegung durchführen, die eine Komponente dH in der Bewegungsrichtung des beweglichen Elements aufweisen, um einen Schritt des beweglichen Elements in die Richtung hervorzurufen.

2. Aktuator gemäß Anspruch 1, **dadurch gekennzeichnet, dass** die Wimpern (9) durch den Stator (S) durch einen ersten piezoelektrischen Stellantrieb (A) getragen werden, der unter den Wimpern (9) angeordnet ist und der aktiviert werden kann, um den Wimpern eine hin- und hergehende Bewegung zu und weg von dem beweglichen Element zu erteilen.

3. Aktuator gemäß Anspruch 2, **dadurch gekennzeichnet, dass** angrenzend zu den Wimpern (9), zwischen dem Stator (S) und dem beweglichen Element (R), ein Abstandselement (10) eingeschoben ist, dass an dem Stator (S) gesichert ist und sich in verschiebbaren Kontakt mit dem beweglichen Element (R) befindet, und dass unter dem Abstandselement (10) ein zweiter piezoelektrischer Stellantrieb (B) angeordnet ist, der aktiviert werden kann, um eine hin- und hergehende Bewegung des Abstandselements (10) zu und weg von dem beweglichen Element (R) mit einer entgegengesetzten Phase zu der des ersten piezoelektrischen Stellantriebs (A) zu erteilen.

4. Aktuator gemäß Anspruch 3, **dadurch gekennzeichnet, dass** eine Vielzahl von ersten und zweiten piezoelektrischen Stellantrieben (A, B) bereitgestellt sind, während sie abwechselnd zueinander, mit den Wimpern (9) über jedem ersten piezoelektrischen Stellantrieb (A) und einem Abstandselement (10) über jedem zweiten piezoelektrischen Stellantrieb (B) angeordnet sind.

5. Aktuator gemäß Anspruch 4, **dadurch gekennzeichnet, dass** der Stator (S) ein Basisblatt (2) enthält, auf dem eine oder mehrere Schichten aus piezoelektrischem Material (5) mit einer Vielzahl von gegenüberliegenden Elektroden (4, 7; 3, 6) angeordnet ist bzw. sind, die auf den zwei gegenüberliegenden Seiten der Schicht aus piezoelektrischem Material (5) angeordnet sind, so dass die zusammenwirkenden Bereiche der Schicht zwischen jedem Paar von gegenüberliegenden Elektroden den ersten und den zweiten piezoelektrischen Stellantrieb (A, B) bilden.

6. Aktuator gemäß Anspruch 4, **dadurch gekennzeichnet, dass** die Abstandselemente (10) alle durch eine oder mehrere Schichten eines Materials mit einem geringen Reibungskoeffizienten gebildet sind.

7. Aktuator gemäß Anspruch 1, **dadurch gekennzeichnet, dass** die Wimpern (9) durch den Stator (S) mittels eines ablenkbaren Blattes (14, 140) parallel zu dem beweglichen Element (R) getragen werden, das in einer freitragenden Weise durch den Stator (S) getragen wird und die Wimpern (9) auf seinem freien Ende hält, wobei das Blatt piezoelektrische Mittel (14, 141) umfasst, die aktiviert werden können, um eine alternierende Ablenkung des Blatts zu und weg von dem beweglichen Element hervorzurufen.

8. Aktuator gemäß Anspruch 7, **dadurch gekennzeichnet, dass** das Blatt (14) durch ein zweiförmiges piezoelektrisches Element (14a, 14b) gebildet ist, das in einer freitragenden Weise durch ein Abstandselement (13) getragen wird, das mit dem Stator (S) verbunden ist.

9. Aktuator gemäß Anspruch 7, **dadurch gekennzeichnet, dass** das Blatt ein Stahlblatt (140) umfasst, auf dem eine Schicht (141) aus einem piezoelektrischen Material aufgetragen ist, wobei das Stahlblatt (140) in einer freitragenden Weise durch ein Abstandselement (13) getragen wird, das mit dem Stator (S) verbunden ist.

## Revendications

1. Actionneur pas-à-pas, comprenant :
un stator plan (S),
un élément mobile plan (R) guidé parallèlement au stator (S) à une distance prédéterminée de celui-ci,
au moins une électrode (11) associée à l'élément mobile (R),
une pluralité de lames ou de cils pouvant dévier (9), qui sont électriquement conducteurs, chacun comportant une extrémité associée au stator (S) et l'extrémité opposée adjacente à l'élément mobile (R), et
un moyen d'alimentation électrique pour appliquer des impulsions de tension entre les cils (9) et ladite électrode (11) associée à l'élément mobile, de façon à amener lesdits cils (9) à adhérer à l'élément mobile (R) durant chaque impulsion de tension, par effet électrostatique,
**caractérisé en ce que** lesdits cils (9) sont associés au stator (S) avec l'interposition de moyens piézoélectriques (A; 14 ; 141) qui peuvent être activés en appliquant des impulsions de tension de façon à prendre de manière cyclique une première configuration, dans laquelle les cils (9) viennent en contact avec l'élément mobile (R), de sorte qu'ils adhèrent à celui-ci grâce audit effet électrostatique, et une seconde configuration, dans laquelle les cils (9) s'écartent de l'élément mobile (R) tout en maintenant leurs extrémités reliées à celui-ci, de sorte que ces extrémités exécutent un déplacement qui présente une composante dH dans la direction du déplacement de l'élément mobile, de façon à provoquer un pas de l'élément mobile dans ladite direction.

2. Actionneur selon la revendication 1, **caractérisé en ce que** lesdits cils (9) sont supportés par le stator (S) grâce à un premier actionneur piézoélectrique (A) disposé en dessous desdits cils et qui peut être activé de façon à communiquer un mouvement de va-et-vient aux cils en direction et en éloignement de l'élément mobile.

3. Actionneur selon la revendication 2, **caractérisé en ce que** de façon adjacente auxdits cils (9), entre le stator (S) et l'élément mobile (9), est intercalé un élément d'espacement (10) qui est fixé au stator (S) et est en contact glissant avec l'élément mobile(R), et **en ce que** en dessous dudit élément d'espacement (10) est disposé un second actionneur piézoélectrique (B) qui peut être activé de façon à communiquer un mouvement de va-et-vient de l'élément d'espacement (10) en direction et en éloignement de l'élément mobile (R), avec une phase opposée à celle dudit premier actionneur piézoélectrique (A).

4. Actionneur selon la revendication 3, **caractérisé en ce qu'**une pluralité de premiers et seconds actionneurs piézoélectriques (A, B) sont prévus, lesquels sont alternés les uns avec les autres, avec des cils (9) au-dessus de chaque premier actionneur piézoélectrique (A) et un élément d'espacement (10) au-dessus de chaque second actionneur piézoélectrique (B).

5. Actionneur selon la revendication 4, **caractérisé en ce que** le stator (S) comprend une lame de base (2) sur laquelle une ou plusieurs couches de matériau piézoélectrique (5) sont disposées, une pluralité d'électrodes opposées (4, 7 ; 3, 6) étant situées sur les deux faces opposées de la couche de matériau piézoélectrique (5) de sorte que les parties coopérantes de ladite couche entre chaque paire d'électrodes opposées forment lesdits premiers et seconds actionneurs piézoélectriques (A, B).

6. Actionneur selon la revendication 4, **caractérisé en ce que** lesdits éléments d'espacement (10) sont chacun constitués d'une ou plusieurs couches d'un matériau présentant un faible coefficient de frottement.

7. Actionneur selon la revendication 1, **caractérisé en ce que** lesdits cils (9) sont supportés par le stator (S) au moyen d'une lame pouvant dévier (14, 140) parallèle à l'élément mobile, supportée en porte-à-faux par le stator (S) et portant les cils (9) sur son extrémité libre, ladite lame comprenant un moyen piézoélectrique (14, 141) qui peut être activé pour provoquer une déviation alternée de la lame en direction et en éloignement de l'élément mobile.

8. Actionneur selon la revendication 7, **caractérisé en ce que** ladite lame (14) est constituée d'un élément piézoélectrique bimorphe (14a, 14b) supporté en porte-à-faux par un élément d'espacement (13) qui est relié audit stator (S).

9. Actionneur selon la revendication 7, **caractérisé en ce que** ladite lame comprend une lame d'acier (140) sur laquelle une couche (141) d'un matériau piézoélectrique est appliquée, ladite lame d'acier (140) étant supportée en porte-à-faux par un élément d'espacement (13) relié au stator (S).
